Europäisches Patentamt

European Patent Office

Office européen des brevets

(11) Publication number: **0 285 291 B1**

# EUROPEAN PATENT SPECIFICATION

(45) Date of publication of patent specification: **14.04.93**   (51) Int. Cl.5: **B29C 47/00**

(21) Application number: **88302375.6**

(22) Date of filing: **18.03.88**

(54) Method of manufacturing polyacetal resin film.

(30) Priority: **01.04.87 JP 80096/87**
     **22.06.87 JP 155057/87**

(43) Date of publication of application:
     **05.10.88 Bulletin  88/40**

(45) Publication of the grant of the patent:
     **14.04.93 Bulletin  93/15**

(84) Designated Contracting States:
     **AT BE CH DE ES FR GB GR IT LI LU NL SE**

(56) References cited:
     **FR-A- 2 191 990**
     **GB-A- 1 198 695**
     **US-A- 3 980 734**

     **MEKHANIKA POLIMEROV, no. 2, March-April
     1972, pages 257-261, Plenum Publishing
     Corp., New York, US; K.N. OBRYADCHIKOVA
     et al.: "Strength properties of polymer films
     subjected to continuous tearing"**

     **DIE MAKROMOLEKULARE CHEMIE, vol. 143,
     April 1971, pages 231-248, Basel, CH; A.K.
     SINGHANIA et al.: "Polymer deformation.
     XVIII. Biaxial deformation of polyox-
     ymethylene"**

(73) Proprietor: **POLYPLASTICS CO. LTD.
     30, Azuchimachi 2-chome
     Higashi-ku Osaka-shi Osaka(JP)**

(72) Inventor: **Taniguchi, Kataro
     23-11, Okukaiinji-shindobata
     Nagaokakyo-shi Kyoto(JP)**
     Inventor: **Konishi, Toshio
     2-34, Ideicho 3-chome
     Nakata Sakai-shi Osaka(JP)**
     Inventor: **Shimada, Takehiko
     6-2,Chiyogaoka 3-chome
     Nara-shi Nara(JP)**
     Inventor: **Tanimoto, Shigekazu
     25-8, Miyashita
     Fuji-shi Shizuoka(JP)**
     Inventor: **Nezu, Shigeru
     324, Miyashita
     Fuji-shi Shizuoka(JP)**

(74) Representative: **Jackson, Peter et al
     HYDE, HEIDE & O'DONNELL 10-12 Priests
     Bridge
     London SW15 5JE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.5x/3.0.1)

**Description**

The invention relates to a method for making film from a polyacetal resin. In particular, the invention method provides a resulting film with a small tear strength both laterally and vertically, which is easy to tear along a straight line.

(Statement of Prior Art)

Polyacetal resins, or polymeric compounds having the group $-CH_2-0-$ as a recurring unit, are well known and widely used as typical engineering plastics.

However, most of them are used exclusively for injection mouldings and they are rarely used for extrusion mouldings and films in particular. The reason is that film forming of such resins is extremely difficult.

One proposal for forming such resins into films is described in British Patent Specification No 1,198,695 which claims a process for the production of a film having an elastic recovery on its first extension of at least 70% from a 50% strain at 25°C, which comprises extruding molten polyethylene, polypropylene or an oxymethylene polymer at a temperature no higher than 100°C above its crystalline melting point, cooling the extrudate within two inches (51 mm) of the extrusion orifice, by contact with a cooling roll or a cooling air stream, stretching the solidifying extrudate at a high rate of draw-down and a draw-down ratio of between 20:1 and 1000:1 and annealing the stretched product by maintaining it at a temperature from 5 to 100°C below the crystalline melting point for at least 5 seconds. Such films are stated to exhibit elastic recoveries which are substantially higher than previously known films, and in particular, it is said that it is thereby possible to make films which retain their stretch properties at temperatures at which entropy-elasticity could not be operative. It is stated that such films may be made by flat-film extrusion or by the blown film technique, i.e. by inflation extrusion.

Flat film extrusion, also known as the T-die process generally comprises broadening a stream of molten plastic introduced from one spot to the desired film width so as to change the stream into one of as uniform a thickness as possible, extruding it through a slit-shaped nozzle in the form of a membrane, then cooling it into a film. The inflation process, often employed in forming a film of polyethylene, comprises extruding molten plastic through an annular extrusion nozzle in a tubular pattern and blowing air or the like fluid into the tube, thereby inflating the tube to form a tubular film. The T-die process and the inflation process have their respective merits and demerits. As compared with the T-die process, the inflation process is generally greater in productivity and more economical, and is suitable for thin-gage film forming, but on the other hand its adaptability varies depending upon the material resin. As such, it cannot be said that the inflation process is applicable to all types of resin. With polyacetal resins, various technical problems have not hitherto been solved for use of such resin for film manufacturing by the inflation process. Therefore, polyacetal resin film manufacturing has not been industrialised so far.

In view of such situation, the present inventors conducted series of studies in order to make it possible to manufacture polyacetal resin films using the inflation process, in particular those films having small tear strength in both lateral and vertical directions and an good linearity of tearing. As a result, they found it possible to apply the inflation process to polyacetal resin film manufacturing by selecting a certain polyacetal resin and certain temperature conditions, and this finding led to the present invention.

(Summary of the Invention)

According to the present invention, there is provided a method of manufacturing a polyacetal resin film characterised in that a polyacetal resin having a melt index (MI) in the range 0.5 to 3.0 is formed into a film by an inflation extrusion process in which extrusion takes place within an extrusion resin temperature (ERT) range coming under the following equation:

$$MP + 10 < ERT \leq MP + 80 - 8 \times MI \ (°C)$$

wherein MP is the melting point of the resin, and wherein during inflation, the blow ratio is in the range of 1.2 to 6.0, the draw ratio is in the range of 1 to 12 and the ratio of the blow ratio to the draw ratio is $0.1 \leq$ blow ratio / draw ratio $\leq 6.0$, thereby to produce extruded polyacetal resin film having a tear strength of 50 kg/cm or less and tear propagation strength of 10 kg/cm or less in both the direction of extrusion and the direction transverse thereto.

2

This invention is based on the discovery that with a polyacetal resin having a melt index of 0.5 - 3.0, is it possible to turn the resin into film by inflation moulding by ensuring that the extrusion resin temperature is within a temperature range coming under the foregoing equation.

The melt index used in the invention (hereinafter called MI) refers to a value determined according to ASTM D 1.238. The melting point refers to the temperature of an endothermic peak determined by differential thermal analysis.

Polyacetal resins of such a type correspond to those of commercially available polyacetal resins which have a relatively low MI and a larger average molecular weight. They may be homopolymer or copolymer. We note here that those having a MI of significantly less than 0.5, for example less than 0.3, are difficult to manufacture as such, and those having a MI of significantly more than 3.0, for example more than 5.0, are undesirable because film making is difficult due to their being subject to draw-down during inflation moulding.

Particularly preferred are polyacetal resins having a cross-linked or branched molecular structure. Such polyacetal resin can be obtained by causing a compound having more than one functional group producing a branched or cross-linked structure to react with a polymerised linear polyacetal polymer. Such resin can also be obtained by incorporating a monomer having more than one functional group capable of producing a branching or cross-linking reaction into one of the monomer components so as to effect copolymerisation. One example of such resin is an acetal copolymer resin in which a trioxane and a monomer having a glycidyl group are polymerised as one component. Of course, a multi copolymer incorporating co-monomers, such as cyclic ether, which are conventionally used, can be used as well as required.

In the process of inflation moulding according to the invention, it is important that when the polyacetal resin having the MI value as aforesaid is melt extruded from an annular nozzle by the inflation technique, the resin temperature should be kept within the range of temperatures specified, that is, according to the following equation:

$$MP + 10 < ERT \leq MP + 80 - 8 \times MI \ (^\circ C)$$

(Brief Description of the Drawing)

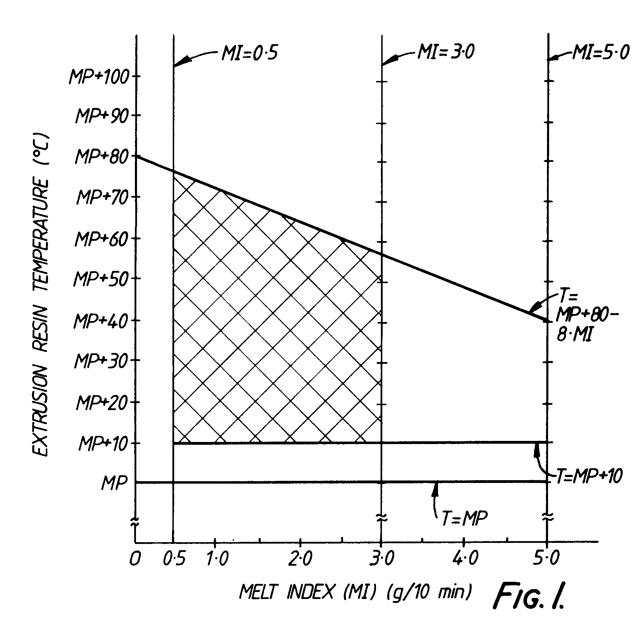

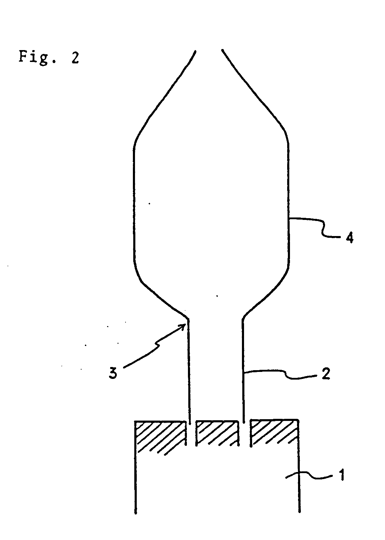

Figure 1 is a graph showing the range of resin temperature to apply to the extrusion step of a resin which accepts inflation moulding according to the invention. Figure 2 shows the inflation step of the invention. A reference numeral 1 shows a die; 2, a tubular article; 3, a point to start with deformation; and 4, a bubble.

These resin temperature ranges applicable to inflation moulding are shown in Figure 1. If the resin temperature is too high, the melt viscosity becomes lower, film forming being rendered difficult due to draw-down effect. If the temperature is too low, the melt viscosity becomes higher, a large pressure loss being caused in the die, resulting in increased power requirements for extruder operation and, accordingly, in lowered productivity. Further, such lower resin temperature accelerates film thickness irregularity.

Film forming of such polyacetal resin by the inflation process in accordance with the invention is rendered practicable by maintaining the foregoing essential requirements. Otherwise, the customary features of the inflation technique are applicable. For example, by employing a crosshead die a tubular molten polyacetal resin is extruded upward or downward, and the end of the tubular extruded resin is pinched between pinch rolls and, while air is blown thereinto so that the tube is inflated to the desired size, the film is continuously taken up. Meanwhile, the die is rotated or reversed, whereby any thickness irregularity can be prevented. The tubular film may be cut at both ends, one of the ends being sealed so that the film is formed into a bag. Or, it may be suitably drawn as a sheet of film and set by heat or otherwise to provide a film taking advantage of the characteristic features of polyacetal resin and varied property values adapted for various end uses. The films produced may be adjusted in thickness according to the normal standards of the inflation technique. Such adjustment can be made generally within the range of 0.005 - 0.1 mm.

Further the present inventors find that a polyacetal resin film prepared by the inflation process according to the present invention has excellent characteristics, namely; the lengthwise tear strength and transverse tear strength are both small and the linearity of tear is excellent.

Generally, a plastics film manufactured by an extrusion moulding process has a molecular orientation in the extrusion direction (also referred to herein as the lengthwise direction) and therefore tearing occurs easily in this direction, whereas tearing in the transverse direction is more difficult. Similarly an extruded film has its larger tensile strength in the lengthwise direction, and the tendency for it to tear in the lengthwise direction is also increased. Thus a film which can be easily torn in both the lengthwise and transverse directions has not hitherto been disclosed.

The inventors find that film which has small tear strength in both lengthwise and transverse directions and excellent linearity of tear can be manufactured by making polyacetal resin film according to the inflation process under the aforementioned conditions.

Among such conditions are that the blow ratio is 1.2 to 6.0, the draw ratio is 1.0 to 12.0 and the ratio of the blow ratio and the draw ratio is as designated in the undermentioned formula:

$$0.1 \leq \text{the blow ratio} / \text{the draw ratio} < 6.0$$

In this specification, the blow ratio and the draw ratio are defined as follows:

In Figure 2, a melted resin extruded from a die 1 is transmitted while holding the about same diameter to form a tube material 2 and thereafter expanded from a starting point of deformation 3. When the diameter of the tube material at the starting point of deformation 3 is $D_N$, the velocity thereof is $V_N$, the diameter of a bubble 4 after the deformation is $D_E$ and the velocity thereof is $V_E$

$$\text{blow ratio} = D_E \text{ (mm)} / D_N \text{ (mm)}$$
$$\text{draw ratio} = V_E \text{ (m/min)} / V_N \text{ (m/min)}.$$

In Figure 1, which is a graph of melt index against extrusion resin temperature the area shown with cross hatching lines is the applicable film forming range: a range of areas bounded by the following four straight lines

$$T = MP + 80 - 8 \times MI,$$
$$T = MP + 10,$$
$$MI = 0.5,$$
$$MI = 3.0$$

The present invention enables a polyacetal resin film, which has tear strength of 50 kg/cm or less in the extrusion direction and also in the transverse direction, a tear propagation strength of 10 kg/cm or less and excellent linearity of tear, to be obtained. However, if the value of the ratio of the blow ratio and the draw ratio becomes less than the above range (< 0.1), the tear strength in the transverse direction becomes larger than the tear strength in the lengthwise direction (extrusion direction) and the linearity of tear in the lengthwise direction becomes smaller. On the other hand, if the value of the ratio of the blow ratio and the draw ratio becomes greater than 6, the tear strength in the transverse direction becomes smaller than the tear strength in the lengthwise direction and the linearity of tear in the lengthwise direction becomes larger.

Because such a film can have a tear strength (as hereinafter defined) of 50 kg/cm or less in the extrusion direction and also in the transverse direction, a tear propagation strength (as hereinafter defined) of 10 kg/cm or less and excellent linearity of tear, the film can be torn well without nap, can be conveniently broken open by a user and can be easily removed from products which it has been used to seal.

The polyacetal resin used in the practice of the invention may, according to the performance requirements for the film, incorporate known substances which may be added to conventional thermoplastic and thermosetting resins, including stabilisers, such as plasticisers, antioxidants, and UV light absorbing agents; antistatic agents; surface active agents; colorants, such as dyes and pigments; lubricants for fluidity improvement; and crystallisation accelerators (nucleating agents). Further, according to the purpose for which the film is used, a small amount of some other thermoplastic resin or inorganic filler may be supplementarily added.

As above described, according to the method of the invention, it is possible to manufacture polyacetal resin films by the inflation technique, and as compared with the conventional T-die process, the invention assures improved productivity and economy. The invention permits easy manufacture of a comparatively thin film through the application of known techniques. The resulting film has excellent properties characteristic of polyacetal resins, e.g., excellent mechanical, physical, chemical, and thermal properties, and further it has such special property as oxygen non-permeability. Therefore, the film may be used alone as such or in lamination with some other film or metallic foil, for packaging purposes or various other end uses taking advantage of its characteristic features. The above shown application of the film obtained by the invention is easy to tear straight because it has a small tear strength in both lateral and vertical directions and an excellent linearity of tearing.

4

(Working Examples of the Invention)

Example 1

An acetal copolymer resin P (having a MI of 2.5 and a melting point of 165°C) was used in which the weight ratio between its oxymethylene portion and its oxyethylene portion was 98:2. By employing a 40 mm diameter extruder and a die with a die diameter of 50 mm and die lip gap of 3 mm, a tubular film was extruded at a resin temperature of 200°C, a draw ratio of 8.0 and a blow ratio of 2.4. The film was taken off at a take-off rate of 21 m/min under air cooling. Thus, a film having a thickness of 25 $\mu$m was obtained.

The properties of the 25 $\mu$m thick film obtained were as shown in Table 1 below.

TABLE 1

| | Extrusion direction | Transverse direction |
|---|---|---|
| Tensile strength kg/cm$^2$ | 567 | 683 |
| Tensile elongation (%) | 76 | 3 |
| Oxygen permeability (cc/m$^2$ - day - latm) | 342 | |
| Tear Strength kg/cm | 6.0 | 20.5 |
| Tear Propagation Strength (kg/cm) | 2.2 | 5.7 |
| Linearity of Tear | 0 | 0 |

The properties of the resin and of the film were determined in the following way:

MI; measured in accordance with ASTM D 1238 and under the conditions of load 2160g at 190°C and cylinder 10 mm x die diameter of 1 m.

Melting point; measured by DSC (heating up rate 5°C/min) at an endothermic peak position.

Tensile strength/elongation; measured according to ASTM D882.

Oxygen permeability; measured according to ASTM D 1434.

Tear strength; measured according to JIS Z Elmendorf tear testing, however, the initial cut was not made on the specimen. The term "tear strength" as used in this specification refers to the force required to initiate tearing of the film.

Tear propagation strength; measured according to JIS Z Elmendorf tear testing. The term "tear propagation strength" as used in this specification refers to the force required to continue tearing after a tear has been initiated.

Linearity of tear; one side of specimen of 300 mm was torn in the transverse direction by hand and the linearity of the torn line was measured. The deviation of the torn line from the transverse direction was judged as follows;

below 10 mm.....0    10 - 50 mm......△    above 50 mm.....x

Example 2

An acetal graft copolymer resin Q (with a MI of 0.8 and a melting point of 166°C) in which the weight ratio between its oxymethylene portion, its oxyethylene portion, and hexaoxymethylene diol glycidyl was 97.2:2:0.8 was used. By employing a 50 mm diameter extruder and a die with a die diameter of 120 mm and a die lip gap of 1 mm, a tubular film was extruded at a resin temperature of 210°C, a draw ratio of 2.0 and blow ratios of 1.2 to 3.6. It was taken out at a take-off rate of 25 to 40 m/min under air cooling. Thus, films having a thickness of 8 - 50 $\mu$m were obtained.

The properties of the films obtained, 25 $\mu$m thick and 50 $\mu$m thick, were as shown in Table 2.

TABLE 2

| | | 25μm thick | | 50μm thick | |
|---|---|---|---|---|---|
| | | Extrusion direction | Transverse direction | Extrusion direction | Transverse direction |
| Tensile strength (kg/cm$^2$) | | 553 | 680 | 600 | 700 |
| Tensile elongation (%) | | 103 | 3.5 | 107 | 3.7 |
| Oxygen permeability (cc/m$^2$ - day - 1 atm) | | 364 | | 181 | |

Comparative Example 1

An acetal copolymer resin (with a MI of 9.0 and a melting point of 165'C) in which the weight ratio between its oxymethylene and oxyethylene portions was 98: 2 was used. Inflation moulding was attempted at varied extrusion resin temperatures in same way as in Example 1, but no stable film forming could be attained.

Examples 3 and 4; Comparative Examples 2 and 3

Film forming attempts were made-using same polyacetal copolymers P and Q as used in Examples 1 and 2 and at varied extrusion resin temperatures. Results are as shown in Table 3 and 4.

TABLE 3

| | | Example 3 (copolymer P) | | Comp. Exmp 2 (copolymer P) | |
|---|---|---|---|---|---|
| Resin temp. (°C) | | 180 | 220 | 240 | 260 |
| Film forming condition | | stable | stable | somewhat unstable | no good (drawdown) |
| Tensile strength (kg/cm$^2$) | extrusion direction | 561 | 533 | - | - |
| | transverse direction | 672 | 633 | - | - |
| Tensile elongation % | extrusion direction | 63 | 72 | - | - |
| | transverse direction | 3.2 | 3.2 | - | - |

TABLE 4

| | | Example 4 (copolymer Q) | | | Comp. Exmp 3 (copolymer Q) |
|---|---|---|---|---|---|
| Resin temp. (°C) | | 180 | 220 | 240 | 260 |
| Film forming condition | | stable. | stable | stable | unstable |
| Tensile strength (kg/cm$^2$) | extrusion direction | 540 | 622 | 533 | - |
| | transverse direction | 667 | 720 | 634 | - |
| Tensile elongation % | extrusion direction | 101 | 108 | 85 | - |
| | transverse direction | 3.5 | 3.7 | 3.2 | - |

6

Example 5, Comparative example 4

A film of 25 μm in thickness was formed under similar conditions to Example 1, but with a blow ratio of 3.6 and draw ratio of 2.0, and the properties thereof were judged similarly. The result thereof is described in Table 5. As a comparative example, low density polyethylene film (MI 0.2) of 25 μm in thickness was formed under the same condition and the result thereof is also described in table 5.

TABLE 5

|  | Extrusion direction | transverse direction |
|---|---|---|
| Example 5 |  |  |
| tensile strength (kg/cm$^2$) | 668 | 683 |
| tear propagation strength (kg/cm) | 4.2 | 4.0 |
| linearity of tear | 0 | 0 |
| Comparative Example 4 |  |  |
| tensile strength (kg/cm$^2$) | 220 | 210 |
| tear propagation strength (kg/cm) | 26.3 | 23.7 |
| linearity of tear | x | x |

**Claims**

1. A method of manufacturing a polyacetal resin film characterised in that a polyacetal resin having a melt index (MI) in the range 0.5 to 3.0 is formed into a film by an inflation extrusion process in which extrusion takes place within an extrusion resin temperature (ERT) range coming under the following equation:

   $$MP + 10 < ERT \leq MP + 80 - 8 \times MI \ (°C)$$

   wherein MP is the melting point of the resin, and wherein during inflation, the blow ratio is in the range of 1.2 to 6.0, the draw ratio is in the range of 1 to 12 and the ratio of the blow ratio to the draw ratio is

   $$0.1 \leq blow\ ratio\ /\ draw\ ratio \leq 6.0,$$

   thereby to produce extruded polyacetal resin film having a tear strength of 50 kg/cm or less and tear propagation strength of 10 kg/cm or less in both the direction of extrusion and the direction transverse thereto.

2. A method of manufacturing a polyacetal resin film as set forth in claim 1, wherein the polyacetal resin has a cross-linked or branched molecular structure.

3. A method of manufacturing a polyacetal resin film as set forth in claim 2, wherein the resin is a copolymer of a trioxane and a monomer having a glycidyl group.

4. A method of manufacturing a polyacetal resin film as set forth in claim 3, wherein the copolymer incorporates a third monomer such as a cyclic ether.

**Patentansprüche**

1. Verfahren zur Herstellung einer Polyacetalharz-Folie, dadurch gekennzeichnet, daß ein Polyacetalharz mit einem Schmelzfluß-Index (MI) im Bereich von 0,5 bis 3,0 durch ein Blas-Extrusionsverfahren zu einer Folie geformt wird, bei dem die Extrusion innerhalb eines Bereichs einer Extrusions-Harztemperatur (ERT) stattfindet, der folgender Gleichung entspricht:

MP + 10 < ERT ≦ MP + 80 - 8 x MI (°C)

worin MP der Schmelzpunkt des Harzes ist und worin während des Blasens das Aufblasverhältnis im Bereich von 1,2 bis 6,0, das Reckverhältnis im Bereich von 1 bis 12 und das Verhältnis des Aufblasverhältnisses zum Reckverhältnis

0,1 ≦ Aufblasverhältnis/Reckverhältnis ≦ 6,0

ist, um dadurch eine extrudierte Polyacetalharz-Folie herzustellen, die eine Reißfestigkeit von 50 kg/cm oder weniger und eine Weiterreißfestigkeit von 10 kg/cm oder weniger sowohl in der Extrusionsrichtung, als auch in der Querrichtung dazu besitzt.

**2.** Verfahren zur Herstellung einer Polyacetalharz-Folie nach Anspruch 1, worin das Polyacetalharz eine vernetzte oder verzweigte Molekularstruktur hat.

**3.** Verfahren zur Herstellung einer Polyacetalharz-Folie nach Anspruch 2, worin das Harz ein Copolymer aus einem Trioxan und einem Monomer mit einer Glycidylgruppe ist.

**4.** Verfahren zur Herstellung einer Polyacetalharz-Folie nach Anspruch 3, worin das Copolymer ein drittes Monomer, wie z.B. einen cyclischen Ether, umfaßt.

**Revendications**

**1.** Un procédé de fabrication d'une pellicule de résine polyacétal, caractérisé en ce qu'une résine polyacétal ayant un indice de fusion (IF) compris dans l'intervalle de 0,5 à 3,0 est transformée en une pellicule par une procédé d'extrusion-soufflage dans lequel l'extrusion a lieu dans un intervalle de température de résine à l'extrusion (TRE) vérifiant la relation suivante :

PF + 10 < TRE ≦ PF + 80 - 8 x IF (°C)

où PF est le point de fusion de la résine, et dans lequel, pendant le soufflage, le taux de gonflage se situe dans l'intervalle de 1,2 à 6,0, le taux d'étirage se situe dans l'intervalle de 1 à 12 et le rapport du taux de gonflage au taux d'étirage est

0,1 ≦ taux de gonflage/taux d'étirage ≦ 6,0

pour produire ainsi une pellicule de résine polyacétal extrudée ayant une résistance à la déchirure de 50 kg/cm ou moins et une résistance à la propagation de déchirure de 10 kg/cm ou moins à la fois dans la direction d'extrusion et dans la direction transversale à celle-ci.

**2.** Un procédé de fabrication d'une pellicule de résine polyacétal selon la revendication 1, dans lequel la résine polyacétal a une structure moléculaire réticulée ou ramifiée.

**3.** Un procédé de fabrication d'une pellicule de résine polyacétal selon la revendication 2, dans lequel la résine est un copolymère d'un trioxanne et d'un monomère ayant un groupe glycidyle.

**4.** Un procédé de fabrication d'une pellicule de résine polyacétal selon la revendication 3, dans lequel le copolymère contient un troisième monomère tel qu'un éther cyclique.

FIG. I.

Fig. 2